(19)

Europäisches Patentamt

European Patent Office

Office européen des brevets

(11) **EP 4 645 007 A1**

(12) **EUROPEAN PATENT APPLICATION**
published in accordance with Art. 153(4) EPC

(43) Date of publication:
**05.11.2025 Bulletin 2025/45**

(21) Application number: **23935018.4**

(22) Date of filing: **15.11.2023**

(51) International Patent Classification (IPC):
***G05B 19/042*** (2006.01)

(52) Cooperative Patent Classification (CPC):
**B62D 57/022; B62D 57/032; G05B 19/042**

(86) International application number:
**PCT/CN2023/131735**

(87) International publication number:
**WO 2024/221850 (31.10.2024 Gazette 2024/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **25.04.2023 CN 202310468838**

(71) Applicant: **Tencent Technology (Shenzhen)
Company Limited
Shenzhen, Guangdong 518057 (CN)**

(72) Inventors:
• **ZHOU, Qinqin
Shenzhen, Guangdong 518057 (CN)**

• **LI, Jingchen
Shenzhen, Guangdong 518057 (CN)**
• **WANG, Haitao
Shenzhen, Guangdong 518057 (CN)**
• **WANG, Shuai
Shenzhen, Guangdong 518057 (CN)**
• **ZHENG, Yu
Shenzhen, Guangdong 518057 (CN)**
• **LI, Xiong
Shenzhen, Guangdong 518057 (CN)**

(74) Representative: **EP&C
P.O. Box 3241
2280 GE Rijswijk (NL)**

(54) **METHOD AND APPARATUS FOR CONTROLLING WHEEL-LEGGED ROBOT, DEVICE, AND STORAGE MEDIUM**

(57)    A method and an apparatus for controlling a wheel-legged robot, a device, and a storage medium are provided, and relate to the field of artificial intelligence technologies. The method includes: for a wheel-legged robot including an inner mechanical leg and an outer mechanical leg, controlling the wheel-legged robot to stand on a support surface such that the two outer mechanical legs and the at least one inner mechanical leg of the wheel-legged robot contact the support surface (1001); and controlling at least one foot wheel, which contacts the support surface, on the two outer mechanical legs to move in a first direction, and controlling at least one foot wheel, which contacts the support surface, on the at least one inner mechanical leg to move in a second direction different from the first direction, to cause the wheel-legged robot to be switched from the initial posture to an adjusted posture (1002). In embodiments of this application, the support region of the wheel-legged robot can be changed by merely adjusting the outer mechanical leg in the first direction and adjusting the inner mechanical leg in the second direction, thereby reducing difficulty in adjusting the support region.

```
┌────────────────────────────────────────────────────┐   1001
│ Control, under a constraint of a support region     │  ⌐
│ corresponding to an initial posture, through an      │
│ outer mechanical leg and an inner mechanical leg, a  │
│ wheel-legged robot to stand on a support surface,    │
│ the support region being a region enclosed by        │
│ contact points respectively between foot wheels on   │
│ the mechanical legs of the wheel-legged robot and    │
│ the support surface                                  │
└────────────────────────────────────────────────────┘
                        │
                        ▼
┌────────────────────────────────────────────────────┐   1002
│ Control a contact point between a foot wheel on the  │  ⌐
│ outer mechanical leg and the support surface to move │
│ in a first direction, and control a contact point    │
│ between a foot wheel on the inner mechanical leg and │
│ the support surface to move in a second direction,   │
│ to cause the wheel-legged robot to be switched from  │
│ the initial posture to an expected posture           │
└────────────────────────────────────────────────────┘
```

FIG. 10

EP 4 645 007 A1

**Description**

RELATED APPLICATION

This application claims priority to Chinese Patent Application No. 2023104688382, entitled "METHOD AND APPARATUS FOR CONTROLLING WHEEL-LEGGED ROBOT, DEVICE, AND STORAGE MEDIUM" and filed on April 25, 2023, which is incorporated herein by reference in its entirety.

FIELD OF THE TECHNOLOGY

Embodiments of this application relate to the field of artificial intelligence technologies, and in particular, to a method and an apparatus for controlling a wheel-legged robot, a device, and a storage medium.

BACKGROUND OF THE DISCLOSURE

With the development of a robot control technology, some organizations and scientific research institutions have successively launched a wheel-legged robot with wheels as feet. The wheel-legged robot can quickly glide relying on foot wheels.

A hexapod wheel-legged robot is used as an example. In the related art, six foot wheels are controlled to move in different directions, to change a support region of the hexapod wheel-legged robot to perform different tasks. However, the hexapod wheel-legged robot is limited by a redundant structure, and location planning needs to be performed on each foot wheel in a direction corresponding to each foot wheel, to adjust the support region, resulting in large difficulty in adjusting the support region.

SUMMARY

Embodiments of this application provide a method and an apparatus for controlling a wheel-legged robot, a device, and a storage medium, and technical solutions are as follows.

According to an aspect of the embodiments of this application, a method for controlling a wheel-legged robot is provided, performed by a computer device, the wheel-legged robot including a body, and two outer mechanical legs and at least one inner mechanical leg that are connected to the body through hip joints, a hip joint corresponding to the at least one inner mechanical leg being located between hip joints corresponding to the two outer mechanical legs, and a rotation center of the hip joint corresponding to the outer mechanical leg and a rotation center of the hip joint corresponding to the inner mechanical leg being located on a same vertical plane; and the method including:

> controlling the wheel-legged robot to stand on a support surface such that the two outer mechanical legs and the at least one inner mechanical leg of the wheel-legged robot contact the support surface, wherein a relative position between at least two foot wheels on the two outer mechanical legs and the at least one inner mechanical leg meets a constraint condition of a support region corresponding to an initial posture, and the support region is a region enclosed by contact points, each of the contact points being respectively between the support surface and corresponding one foot wheel on the two outer mechanical legs and at least one inner mechanical leg; and

> controlling at least one foot wheel, which contacts the support surface, on the two outer mechanical legs to move in a first direction, and controlling at least one foot wheel, which contacts the support surface, on the at least one inner mechanical leg to move in a second direction different from the first direction, to cause the wheel-legged robot to be switched from the initial posture to an adjusted posture.

According to an aspect of the embodiments of this application, an apparatus for controlling a wheel-legged robot is provided, the wheel-legged robot including a body, and two outer mechanical legs and at least one inner mechanical leg that are connected to the body through hip joints, a hip joint corresponding to the at least one inner mechanical leg being located between hip joints corresponding to the two outer mechanical legs, and a rotation center of the hip joint corresponding to the outer mechanical leg and a rotation center of the hip joint corresponding to the inner mechanical leg being located on a same vertical plane; and the apparatus including:

> a mechanical leg control module, configured to: control the wheel-legged robot to stand on a support surface such that the two outer mechanical legs and the at least one inner mechanical leg of the wheel-legged robot contact the support surface, wherein a relative position between at least two foot wheels on the two outer mechanical legs and the at least one inner mechanical leg meets a constraint condition of a support region corresponding to an initial posture, and the support region is a region enclosed by contact points, each of the contact points being respectively between the support surface and corresponding one foot wheel on the two outer mechanical legs and at least one inner mechanical leg; and

a moving module, configured to: control at least one foot wheel, which contacts the support surface, on the two outer mechanical legs to move in a first direction, and controlling at least one foot wheel, which contacts the support surface, on the at least one inner mechanical leg to move in a second direction different from the first direction, to cause the wheel-legged robot to be switched from the initial posture to an adjusted posture.

According to an aspect of the embodiments of this application, a computer device is provided, including a processor and a memory, the memory having a computer program stored therein, the computer program being loaded and executed by the processor to implement the foregoing method for controlling a wheel-legged robot.

According to an aspect of the embodiments of this application, a computer-readable storage medium is provided, the readable storage medium having a computer program stored therein, the computer program being loaded and executed by a processor to implement the foregoing method for controlling a wheel-legged robot.

According to an aspect of the embodiments of this application, a computer program product is provided, including a computer program, the computer program being stored in a computer-readable storage medium. A processor of a computer device reads the computer program from the computer-readable storage medium, and the processor executes the computer program, to cause the computer device to perform the foregoing method for controlling a wheel-legged robot.

The technical solutions provided in the embodiments of this application can include the following beneficial effects.

For a wheel-legged robot including an inner mechanical leg and an outer mechanical leg, because rotation centers of hip joints corresponding to the wheel-legged robot are located on a same vertical plane, a support region of the wheel-legged robot can be changed by merely adjusting the outer mechanical leg in a first direction and adjusting the inner mechanical leg in a second direction, thereby reducing difficulty in adjusting the support region and further improving efficiency of adjusting the support region.

In addition, because the wheel-legged robot can be flexibly switched between a large support region and a small support region by merely adjusting the inner mechanical leg and the outer mechanical leg in the two directions, the wheel-legged robot can carry loads in the large support region, and can also pass through narrow space in the small support region. In addition, a height of the wheel-legged robot can also change with the switching of the support region, expanding operating space of a body (such as an upper limb) of the wheel-legged robot, thereby improving a capability of the wheel-legged robot in adapting to an environment and expanding a scope of application of the wheel-legged robot.

BRIEF DESCRIPTION OF THE DRAWINGS

FIG. 1 is a schematic diagram of a solution implementation environment according to an embodiment of this application.

FIG. 2 is a schematic diagram of a quadruped wheel-legged robot according to an embodiment of this application.

FIG. 3 is a schematic diagram of a wheel-legged robot transporting a heavy object according to an embodiment of this application.

FIG. 4 is a schematic diagram of a wheel-legged robot holding a person according to an embodiment of this application.

FIG. 5 is a schematic diagram of a wheel-legged robot picking up an object according to another embodiment of this application.

FIG. 6 is a schematic diagram of a wheel-legged robot passing through a curve according to an embodiment of this application.

FIG. 7 is a schematic diagram of a wheel-legged robot in a bipedal wheel support state according to an embodiment of this application.

FIG. 8 is a schematic diagram of a wheel-legged robot grabbing a high-positioned object according to an embodiment of this application.

FIG. 9 is a schematic diagram of a wheel-legged robot picking up a low-positioned object according to an embodiment of this application.

FIG. 10 is a flowchart of a method for controlling a wheel-legged robot according to an embodiment of this application.

FIG. 11 is a schematic diagram of a planar model of a wheel-legged robot according to an embodiment of this application.

FIG. 12 is a schematic diagram of a planar model of a wheel-legged robot according to another embodiment of this application.

FIG. 13 is a flowchart of a method for controlling a wheel-legged robot according to another embodiment of this application.

FIG. 14 is a block diagram of an apparatus for controlling a wheel-legged robot according to an embodiment of this application.

FIG. 15 is a block diagram of an apparatus for controlling a wheel-legged robot according to another embodiment of this application.

FIG. 16 is a simplified structural block diagram of a computer device according to an embodiment of this application.

DESCRIPTION OF EMBODIMENTS

To make objectives, technical solutions, and advantages of this application clearer, the following further describes implementations of this application in detail with reference to the accompanying drawings.

Artificial intelligence (AI) is a theory, method, technology, and application system that uses a digital computer or a machine controlled by the digital computer to simulate, extend, and expand human intelligence, perceive an environment, obtain knowledge, and use knowledge to obtain an optimal result. In other words, the artificial intelligence is a comprehensive technology in computer science. The artificial intelligence attempts to understand an essence of intelligence, and produces a new intelligent machine that can react in a manner similar to the human intelligence. The artificial intelligence is to study design principles and implementation methods of various intelligent machines, to enable the machines to have functions of perception, reasoning, and decision-making.

The artificial intelligence technology is a comprehensive discipline, and relates to a wide range of fields including both a hardware-level technology and a software-level technology. Basic artificial intelligence technologies generally include technologies such as a sensor, a dedicated artificial intelligence chip, cloud computing, distributed storage, a big data processing technology, a pre-training model technology, an operating/interaction system, and electromechanical integration. The pre-training model is also referred to as a big model or a basic model, and may be widely used in downstream tasks in various directions of artificial intelligence after fine-tuning. Artificial intelligence software technologies mainly include several major directions such as a computer vision technology, a speech processing technology, a natural language processing technology, and machine learning/deep learning.

The technical solutions of this application mainly relate to a robot technology in the artificial intelligence technologies, and mainly relate to robot intelligent control. A robot is a mechanical electronic device that is combined by using mechanical transmission and modern microelectronics technologies and that can imitate a specific skill of a human. The robot is developed based on electronic, mechanical, and information technologies. The robot does not necessarily have to look like a human, and is a member of a robot family as long as the robot can autonomously complete a task and a command assigned by a human to the robot. The robot is an autonomous machine. The machine has some intelligent capabilities, such as a sensing capability, a planning capability, an acting capability, and a coordinating capability, that are similar to those of a human or a living thing, and is an automatic machine with high flexibility. With the development of a computer technology and the artificial intelligence technologies, the robot is greatly improved in a functional level and a technical level. A mobile robot and technologies such as robot vision and touch are typical representatives.

In the technical solutions provided in the embodiments of this application, operations may be performed by a computer device. The computer device is an electronic device with data calculation, processing, and storage capabilities.

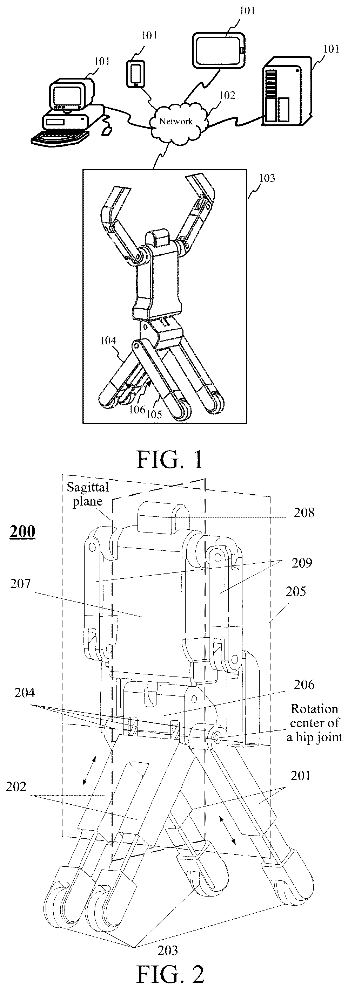

In some embodiments, the computer device may be a device such as a desktop computer or a notebook computer that is configured to control a personal computer (PC) of a wheel-legged robot; or may be a server configured to control a wheel-legged robot. The server may be an independent physical server, or may be a server cluster including a plurality of physical servers or a distributed system, or may further be a cloud server that provides cloud computing services. The computer device and the wheel-legged robot may be connected through a physical line, a network, or the like. For example, referring to FIG. 1, a computer device 101 may control, based on data corresponding to an expected posture through a network 102, a wheel-legged robot 103 to move. For example, the computer device 101 may adjust an included angle 106 between an inner mechanical leg 104 and an outer mechanical leg 105 of the wheel-legged robot 103 based on the data corresponding to the expected posture, to change a support region of the wheel-legged robot 103.

In some embodiments, the computer device may alternatively be the wheel-legged robot itself. In other words, the operations in the technical solutions provided in the embodiments of this application are performed by the wheel-legged robot. For example, referring to FIG. 1, the computer device 101 may transmit the data corresponding to the expected posture to the wheel-legged robot 103 through the network 102, and the wheel-legged robot 103 moves based on the data corresponding to the expected posture. In some embodiments, alternatively, the wheel-legged robot 103 may automatically adjust the support region thereof according to a real environment, to perform different tasks in the real environment. This is not limited in the embodiments of this application.

In a method for controlling a wheel-legged robot provided in the embodiments of this application, through adjustment of an included angle between an inner mechanical leg and an outer mechanical leg, a support region of the wheel-legged robot can be adjusted to an expected size, for performing a specified task. For example, the support region of the wheel-legged robot is adjusted to a large support region, for transporting a heavy object. For another example, the support region of the wheel-legged robot is adjusted to a small support region, for passing through narrow space (such as a corridor). The embodiments of this application also support adjusting a height of a body of the wheel-legged robot to an expected height, for performing a specified task. For example, the height of the body of the wheel-legged robot is adjusted to the expected height, for grabbing a high-positioned object. In the technical solutions provided in the embodiments of this application, a conflict problem between a large load and flexible movement of the wheel-legged robot can be resolved, and a problem of how a single wheel-legged robot can expand operating space can also be resolved, thereby improving a capability of the wheel-legged robot in adapting to an environment and expanding a scope of application of the wheel-legged robot.

In an example, the wheel-legged robot in the embodiments of this application includes a body, and two outer mechanical legs and at least one inner mechanical leg, for example, two outer mechanical legs and two inner mechanical legs (that is, the wheel-legged robot is a quadruped wheel-legged robot) or two outer mechanical legs and one inner mechanical leg (that is, the wheel-legged robot is a tripedal wheel-legged robot), that are connected to the body through hip joints. A hip joint corresponding to the at least one inner mechanical leg is located between hip joints corresponding to the two outer mechanical legs, and a rotation center of the hip joint corresponding to the outer mechanical leg and a rotation center of the hip joint corresponding to the inner mechanical leg are located on a same vertical plane. The wheel-legged robot may stand on a support surface through the outer mechanical leg and the inner mechanical leg. The wheel-legged robot may glide on the support surface through a foot wheel on the outer mechanical leg and a foot wheel on the inner mechanical leg.

For example, FIG. 2 is a schematic diagram of a structure of a quadruped wheel-legged robot. A quadruped wheel-legged robot 200 may include a body, hip joints, and mechanical legs.

The quadruped wheel-legged robot 200 includes four mechanical legs: two outer mechanical legs 201 and two inner mechanical legs 202. The two inner mechanical legs 202 are located between the two outer mechanical legs 201, and each of the four mechanical legs can separately expand and contract in a direction shown in the figure. Each of the four mechanical legs is mounted with one foot wheel 203 at one end, and each foot wheel 203 can be separately driven. The quadruped wheel-legged robot 200 may stand through the two inner mechanical legs 202 or the two outer mechanical legs 201, to be in a bipedal wheel support state; or the quadruped wheel-legged robot 200 may stand through the two inner mechanical legs 202 and the two outer mechanical legs 201 simultaneously, to be in a quadruped wheel support state. This is not limited in the embodiments of this application.

In some embodiments, the two inner mechanical legs 202 may be implemented as a whole. In other words, the quadruped wheel-legged robot 200 may be implemented as a tripedal wheel-legged robot with only one inner mechanical leg.

The other end of each of the four mechanical legs is connected to one hip joint 204, and each mechanical leg may rotate around the respective hip joint 204 and maintain linkage. In the embodiments of this application, rotation centers of the hip joints 204 corresponding to the quadruped wheel-legged robot 200 are located on a same vertical plane 205, and rotation planes of the mechanical legs corresponding to the quadruped wheel-legged robot 200 are parallel. Hip joints 204 corresponding to the two inner mechanical legs 202 are located between hip joints 204 corresponding to the two outer mechanical legs 201.

In some embodiments, the hip joints 204 corresponding to the quadruped wheel-legged robot 200 may be coaxial. In other words, the rotation centers of the hip joints 204 are located on a same straight line. The hip joints 204 corresponding to the quadruped wheel-legged robot may alternatively be not coaxial. For example, the hip joints 204 corresponding to the two inner mechanical legs 202 are coaxial, and the hip joints 204 corresponding to the two outer mechanical legs 201 are coaxial, but the hip joints 204 corresponding to the two inner mechanical legs 202 and the hip joints 204 corresponding to the two outer mechanical legs 201 are not coaxial.

In some embodiments, the hip joints 204 corresponding to the two outer mechanical legs 201 share one drive motor, to cause the two outer mechanical legs 201 to synchronously move; and the hip joints 204 corresponding to the two inner mechanical legs 202 share one drive motor, to cause the two inner mechanical legs 202 to synchronously move. In a possible example, alternatively, the hip joints 204 corresponding to the quadruped wheel-legged robot 200 may be independently driven by respective corresponding drive motors. This is not limited in the embodiments of this application.

The body of the quadruped wheel-legged robot 200 may include a waist 206, a trunk 207, a head 208, and upper limbs 209.

The hip joints 204 corresponding to the quadruped wheel-legged robot 200 are connected to a same end of the waist 206, and the other end of the waist 206 is connected to an end of the body 207. The waist 206 includes two rotation centers: a pitch rotation center enabling the trunk 207 to pitch, and a yaw rotation center enabling the trunk 207 to yaw. A design that the yaw rotation center is connected in series with the pitch rotation center is maintained. The yaw rotation center is located at an upper end of the pitch rotation center, and is connected to the trunk 207.

Another end of the trunk 207 is connected to the head 208 and the upper limbs 209. The upper limbs 209 may be multi-degree of freedom upper limbs. In some embodiments, an end actuator such as a mechanical gripper or a suction cup is disposed on the upper limb 209. A data collection device such as an image collection device or a video photographing device may be disposed in the head 208 to perceive the real environment.

In the technical solutions provided in the embodiments of this application, the foot wheels, the mechanical legs, the hip joints, and the waist of the quadruped wheel-legged robot 200 are necessary hardware for a control algorithm, and the rest are non-necessary hardware.

Compared with a bipedal wheel-legged robot, the quadruped wheel-legged robot has a more stable structure and a stronger capability in resisting external impact disturbance. Compared with a hexapod wheel-legged robot, the quadruped wheel-legged robot includes fewer redundant joints and lower design complexity. In addition, the quadruped wheel-legged robot can not only bear a large load, but also pass through narrow space, and can further perform tasks on objects of different heights. The quadruped wheel-legged robot has a stronger capability in adapting to the environment.

An exemplary description is made below for application scenarios of the wheel-legged robot according to the embodiments of this application.

In some embodiments, in a scenario that the wheel-legged robot needs to bear a large load, the included angle between the inner mechanical leg and the outer mechanical leg may be adjusted, to enlarge the support region of the wheel-legged robot. Because the support region is large enough, the wheel-legged robot has better stability under the large load. Especially when the load is greatly offset from a center of the wheel-legged robot, the wheel-legged robot is not prone to tip over. The two outer mechanical legs of the wheel-legged robot synchronously move, the inner mechanical legs synchronously move, and a length of the mechanical leg of the wheel-legged robot remains unchanged during a change of the support region.

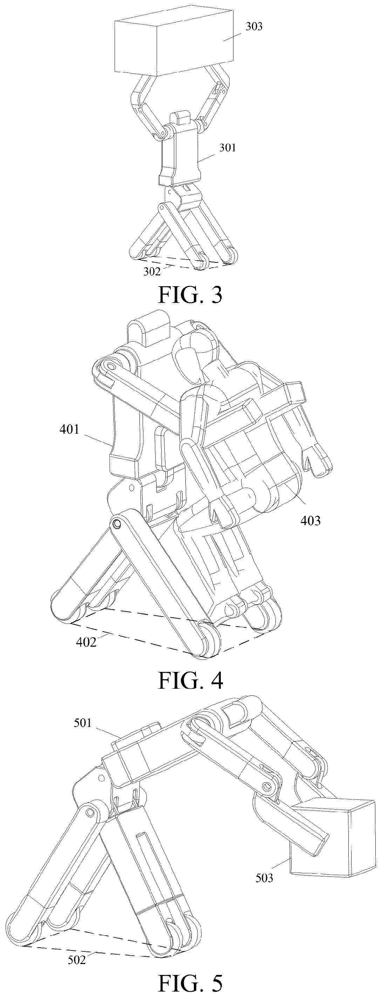

For example, referring to FIG. 3, when needing to transport a heavy object 303, a wheel-legged robot 301 may enlarge a support region 302 corresponding to the wheel-legged robot 301, to transport the heavy object 303 more stably. For another example, referring to FIG. 4, when holding a person 403 through upper limbs, a wheel-legged robot 401 may also enlarge a support region 402 corresponding to the wheel-legged robot 401, to hold the person 403 more stably. For another example, referring to FIG. 5, an object 503 is greatly offset from a center of a wheel-legged robot 501, and the wheel-legged robot 501 may enlarge a support region 502, to stand on a support surface more stably to pick up the object 503 and be not prone to tip over.

In some embodiments, when needing to move in a narrow environment, the wheel-legged robot may reduce the support region of the wheel-legged robot by adjusting the included angle between the inner mechanical leg and the outer mechanical leg. Because the support region of the wheel-legged robot is small and an occupied area of the wheel-legged robot is small, so that the wheel-legged robot can enter small space (such as a kitchen or a small warehouse) to complete a task. In addition, because the support region is small and a turning radius of the wheel-legged robot is small, so that the wheel-legged robot can turn more easily in a narrow corridor (such as a subway gate or a residential corridor), thereby expanding a range of reachable space of the wheel-legged robot.

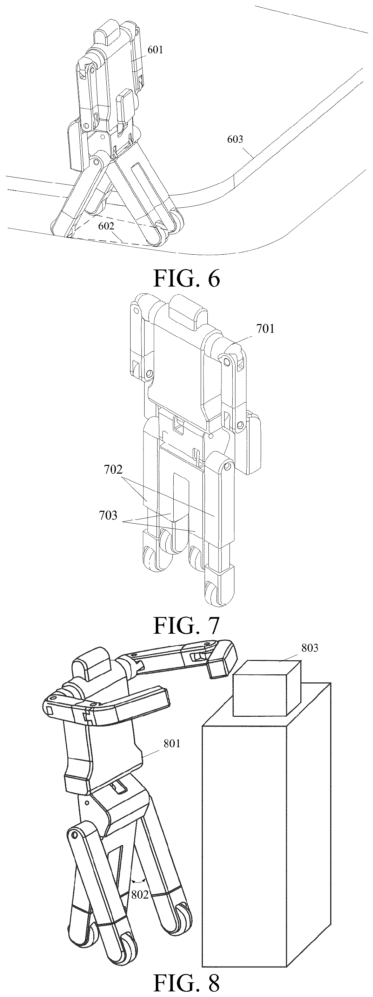

For example, referring to FIG. 6, when a wheel-legged robot 601 needs to pass through a curve of a corridor 603, the wheel-legged robot 601 may reduce a turning radius by reducing a support region 602, to pass through the curve of the corridor 603.

In some embodiments, according to the technical solutions provided in the embodiments of this application, the support region of the wheel-legged robot may become zero. In other words, the inner mechanical leg and the outer mechanical leg overlap, and the wheel-legged robot enters a bipedal wheel support state. In this way, the quadruped wheel-legged robot becomes the bipedal wheel-legged robot. In this case, the wheel-legged robot can be used in all scenarios, such as two-wheel balancing for object transportation and two-wheel balancing for an upper limb operation, in which the bipedal wheel-legged robot can be used. The wheel-legged robot in the bipedal wheel support state can achieve zero turning radius, that is, turn on the spot, which greatly improves flexibility of the wheel-legged robot.

For example, referring to FIG. 7, a wheel-legged robot 701 is in a bipedal wheel support state, and stands on a support surface through foot wheels on two outer mechanical legs 702. Two inner mechanical legs 703 of the wheel-legged robot 701 are in a retracted state, in other words, foot wheels corresponding to the inner mechanical legs 703 are not in contact with a floor.

In some embodiments, in a process in which the wheel-legged robot adjusts the support region, if a leg length of the mechanical leg is not changed, a height of the wheel-legged robot is changed accordingly, thereby expanding movement space of the upper limbs of the wheel-legged robot and further helping the wheel-legged robot to complete some operation tasks, such as grabbing a high-positioned object and picking up an object on a floor.

For example, referring to FIG. 8, in a case that a length of a mechanical leg is not changed, an included angle 802 between an inner mechanical leg and an outer mechanical leg is reduced, to reduce a support region of a wheel-legged robot 801, so that a height of the wheel-legged robot 801 in a vertical direction is increased, and the wheel-legged robot 801 can grab a high-positioned object 803.

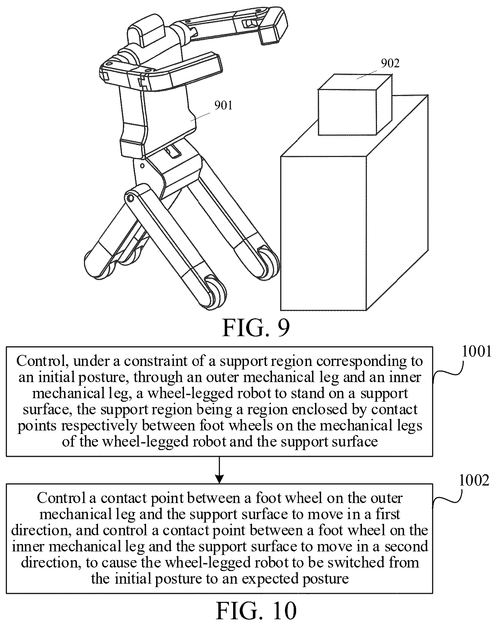

For another example, referring to FIG. 9, if a current height of a wheel-legged robot 901 disables the wheel-legged robot 901 to pick up an object 902 on a table top, the height can be increased to enable the wheel-legged robot 901 to pick up the object 902 in a pitch state. Alternatively, the height can be decreased to enable upper limbs of the wheel-legged robot 901 to be in contact with the object 902, so that the wheel-legged robot 901 picks up the object 902.

The method for controlling a wheel-legged robot provided in the embodiments of this application is described below by using a method embodiment.

FIG. 10 is a flowchart of a method for controlling a wheel-legged robot according to an embodiment of this application. In this embodiment of this application, an example in which operations are performed by the wheel-legged robot is used, for description of the method for controlling a wheel-legged robot. The method may include the following operations (1001 and 1002).

Operation 1001: Control, under a constraint of a support region corresponding to an initial posture, through an outer mechanical leg and an inner mechanical leg, the wheel-legged robot to stand on a support surface, the support region being a region enclosed by contact points respectively between foot wheels on the mechanical legs of the wheel-legged robot and the support surface (in embodiments of the present application, operation 1001 can be considered as following operations: control the wheel-legged robot to stand on a support surface such that the two outer mechanical legs and the at least one inner mechanical leg of the wheel-legged robot contact the support surface, wherein a relative position between at least two foot wheels on the two outer mechanical legs and the at least one inner mechanical leg meets a constraint condition of a support region corresponding to an initial posture, and the support region is a region enclosed by contact points, each of the contact points being respectively between the support surface and corresponding one foot wheel on the two outer mechanical legs and at least one inner mechanical leg).

The initial posture in this embodiment of this application is an initial posture of the wheel-legged robot. The initial posture is configured for describing an initial state of the wheel-legged robot in task space, and mainly includes initial postures of the mechanical legs of the wheel-legged robot, such as an included angle between the outer mechanical leg and the inner mechanical leg, locations of foot wheels on the mechanical legs, a location relationship between the mechanical leg and a waist, a location relationship between the mechanical leg and the support surface, a length of the mechanical leg, and an angular velocity of the foot wheel. The foregoing initial posture may further include an initial posture of a body of the wheel-legged robot.

In an example, the initial posture may be a non-bipedal wheel support state. In other words, each foot wheel of the wheel-legged robot in the initial state is in contact with the support surface. For example, in a case that the wheel-legged robot is the foregoing quadruped wheel-legged robot, the initial posture may be a quadruped wheel support state; and in a case that the wheel-legged robot is the foregoing tripedal wheel-legged robot, the initial posture may be a tripedal wheel support state. The support surface may include merely one plane, such as a flat floor or a road, or may include a plurality of planes of different heights, such as a corridor. This is not limited in the embodiments of this application. In some embodiments, the initial posture may alternatively be a bipedal wheel support state, but needs to be switched to the non-bipedal wheel support state before the support region is adjusted.

The initial posture may be set and adjusted according to an actual use requirement. This is not limited in the embodiments of this application. In some embodiments, when the wheel-legged robot performs a task, each current posture of the wheel-legged robot may be used as an initial posture at a future moment. The future moment is a moment after a current moment. Descriptions of the wheel-legged robot in this embodiment of this application is the same as the descriptions in the foregoing embodiment. Details are not described herein again.

The support region may be configured for constraining relative locations of the foot wheels of the wheel-legged robot. For example, relative locations of the foot wheels of the wheel-legged robot in the initial posture are to satisfy the constraint of the support region corresponding to the initial posture. For example, in a case that the wheel-legged robot includes two outer mechanical legs and two inner mechanical legs, for the wheel-legged robot in the initial state, a region enclosed by contact points respectively between foot wheels on the two outer mechanical legs and the support surface and contact points respectively between foot wheels on the two inner mechanical legs and the support surface satisfies a constraint of a support region corresponding to the initial state. In a case that the wheel-legged robot includes two outer mechanical legs and one inner mechanical legs, for the wheel-legged robot in the initial state, a region enclosed by contact points respectively between foot wheels on the two outer mechanical legs and the support surface and a contact point between a foot wheel on the inner mechanical leg and the support surface satisfies a constraint of a support region corresponding to the initial state.

In some embodiments, because each mechanical leg of the wheel-legged robot in the embodiments of this application has merely one degree of freedom, in a case that relative locations between the foot wheels are determined, relative locations between the mechanical legs may also be determined, and relative locations between the mechanical legs and the waist may also be determined. This facilitates reducing complexity of adjusting the support region.

For example, referring to FIG. 6, under a constraint of a support region 602 corresponding to an initial posture, locations of foot wheels of a wheel-legged robot 601 may be determined, so that locations of mechanical legs of the wheel-legged robot 601 may be determined. In this way, the wheel-legged robot 601 can stand on a support surface in the initial posture.

Operation 1002: Control a contact point between a foot wheel on the outer mechanical leg and the support surface to move in a first direction, and control a contact point between a foot wheel on the inner mechanical leg and the support surface to move in a second direction, to cause the wheel-legged robot to be switched from the initial posture to an expected posture (in embodiments of the present application, operation 1002 can be considered as following operations: control at least one foot wheel, which contacts the support surface, on the two outer mechanical legs to move in a first direction, and controlling at least one foot wheel, which contacts the support surface, on the at least one inner mechanical leg to move in a second direction different from the first direction, to cause the wheel-legged robot to be switched from the initial posture to an adjusted posture).

In the embodiments of this application, two outer mechanical legs of the wheel-legged robot synchronously move, and in a case that the wheel-legged robot includes at least two inner mechanical legs, the inner mechanical legs also synchronously move. In this way, the support region of the wheel-legged robot can be flexibly adjusted in a case that the body of the wheel-legged robot remains unchanged (that is, the body is in a stable posture, and synchronously moves with the mechanical legs without additional adjustment).

In some embodiments, the length of the mechanical leg of the wheel-legged robot remains unchanged during a change of the support region. In this way, a height of the body of the wheel-legged robot can be flexibly adjusted in a case that the body of the wheel-legged robot remains unchanged. In addition, because there is no need to consider an influence of a change of a leg length of the mechanical leg on the support region, complexity of adjusting the support region is further reduced.

In some embodiments, when the support region of the wheel-legged robot is adjusted, to ensure that the wheel-legged robot can stably stand on the support surface, the foregoing first direction needs to be opposite to the second direction.

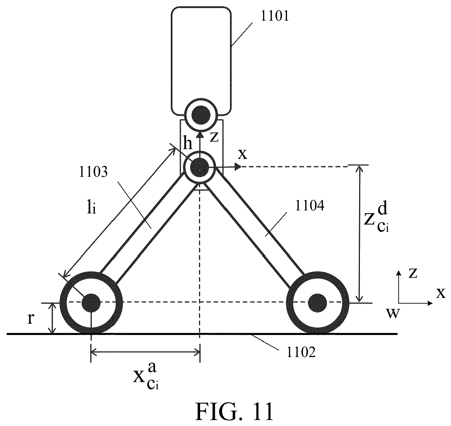

Therefore, the technical solutions provided in the embodiments of this application may be simplified to adjusting the included angle between the outer mechanical leg and the inner mechanical leg, to adjust the support region and the height of the body. In this embodiment of this application, the adjustment of the support region is performed mainly on a sagittal plane (for example, a symmetrical plane of the wheel-legged robot), so that the wheel-legged robot may be abstracted as a plane model. For example, referring to FIG. 11, a plane model 1101 of a wheel-legged robot stands on a support surface 1102, and a support region can be adjusted by adjusting an included angle between an outer mechanical leg 1103 and an inner mechanical leg 1104. Hip joints of the wheel-legged robot are coaxial. In this way, complexity of a structure of the wheel-legged robot is further reduced, thereby facilitating reducing complexity of adjusting the support region.

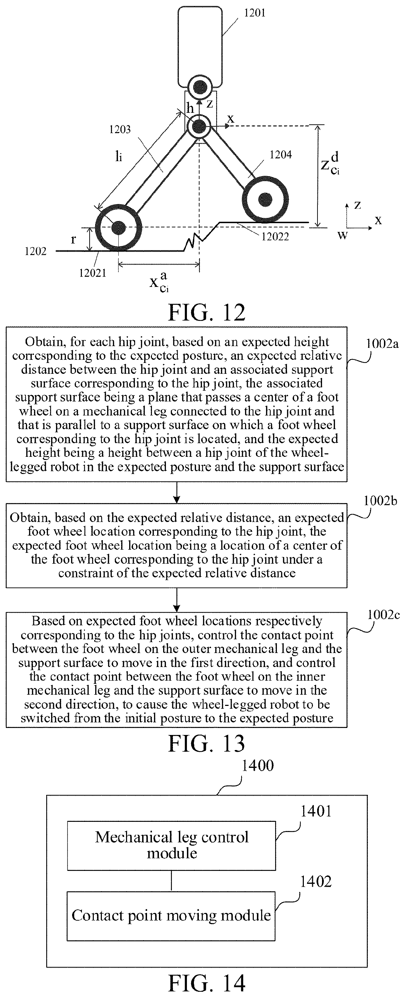

For another example, referring to FIG. 12, a plane model 1201 of a wheel-legged robot stands on a support surface 1202, and the support surface 1202 includes a sub-support surface 12021 and a sub-support surface 12022. A foot wheel on an outer mechanical leg 1203 is in contact with the sub-support surface 12021, and a foot wheel on an inner mechanical leg 1204 is in contact with the sub-support surface 12022. A support region can be adjusted by adjusting an included angle between the outer mechanical leg 1203 and the inner mechanical leg 1204.

In some embodiments, the height of the body may be equivalently replaced by a height of the hip joint. In a case that the leg length of the wheel-legged robot is unchanged, because the height of the body may be equivalently replaced by the included angle between the outer mechanical leg and the inner mechanical leg, and the height of the hip joint may be equivalently replaced by the included angle between the outer mechanical leg and the inner mechanical leg, the wheel-legged robot may control, based on an expected height of the hip joint, the mechanical legs to move, to complete the adjustment of the support region, thereby reducing difficulty in adjusting the support region. In addition, a height required in a task can be satisfied, thereby expanding working space of the upper limbs of the wheel-legged robot. Referring to FIG. 13, the foregoing operation 1002 may further include the following several sub-operations.

Operation 1002a: Obtain, for each hip joint, based on an expected height corresponding to the expected posture, an expected relative distance between the hip joint and an associated support surface corresponding to the hip joint, the associated support surface being a plane that passes a center of a foot wheel on a mechanical leg connected to the hip joint and that is parallel to a support surface on which a foot wheel corresponding to the hip joint is located, and the expected height being a height between a hip joint of the wheel-legged robot in the expected posture and the support surface.

The expected posture may be a posture corresponding to a support region in an expected size, and the expected size may be determined based on the expected height. The expected height may be set by a user, or may be set by the wheel-legged robot according to a real environment. This is not limited in the embodiments of this application.

The expected relative distance is a relative distance between a hip joint of the wheel-legged robot in the expected posture and an associated support surface corresponding to the hip joint, and may be represented by using a length of a perpendicular line from a rotation center of the hip joint to the associated support surface.

For example, referring to FIG. 12, an example in which an expected relative distance corresponding to a hip joint of the outer mechanical leg 1203 is obtained is used. The outer mechanical leg 1203 corresponds to the sub-support surface 12021, so that a height between the hip joint corresponding to the outer mechanical leg 1203 and the sub-support surface 12021 may be obtained based on the expected height, and then the expected relative distance $z^d_{c_i}$ corresponding to the hip joint may be obtained by subtracting a radius r of the foot wheel from the height, where d represents an expected value, and $c_i$ represents a foot wheel (for example, the foot wheel corresponding to the outer mechanical leg 1203) corresponding to an $i^{th}$ mechanical leg. Expected relative distances respectively corresponding to the hip joints may be obtained by using the same method.

Operation 1002b: Obtain, based on the expected relative distance, an expected foot wheel location corresponding to the hip joint, the expected foot wheel location being a location of a center of the foot wheel corresponding to the hip joint under a constraint of the expected relative distance.

In some embodiments, leg lengths of the two outer mechanical legs are the same, leg lengths of the inner mechanical legs are the same, and the leg length of the outer mechanical leg and the leg length of the inner mechanical leg may be the same or may be different. This is not limited in the embodiments of this application. The expected foot wheel location is a location that a foot wheel of the wheel-legged robot in the expected posture is expected to reach.

In an example, a process of obtaining the expected foot wheel location may be as follows: obtaining a leg length of a mechanical leg connected to the hip joint; and obtaining, based on the leg length and the expected relative distance, the expected foot wheel location corresponding to the hip joint.

For example, referring to FIG. 12, the leg length $1_i$, the expected relative distance $z^d_{c_i}$, and the expected foot wheel location $x^d_{c_i}$ form a right triangle. If the leg length $1_i$ and the expected relative distance $z^d_{c_i}$ are known, the expected foot wheel location $x^d_{c_i}$ may be represented as follows:

$$x^d_{c_i} = \pm \sqrt{(1^2_i - z^{d\,2}_{c_i})} \quad,$$

where $1_i$ is a leg length of a mechanical leg to which an $i^{th}$ foot wheel belongs. The expected foot wheel location may be obtained according to a simple Pythagorean theorem, further reducing difficulty in adjusting the support region.

In some embodiments, in a case that the foot wheel corresponding to the hip joint is located on a right side of a vertical plane, the expected foot wheel location corresponding to the hip joint is a positive value, to represent that a contact point between the foot wheel and the support surface needs to move to the right side of the vertical plane; or in a case that the foot wheel corresponding to the hip joint is located on a left side of a vertical plane, the expected foot wheel location corresponding to the hip joint is a negative value, to represent that a contact point between the foot wheel and the support surface needs to move to the left side of the vertical plane. In this way, a movement direction of the foot wheel is represented by using a positive/negative value, thereby simplifying representation of the expected foot wheel location and facilitating reducing difficulty in adjusting the support region.

For example, referring to FIG. 12, the outer mechanical leg 1203 is located on the left side of the vertical plane, and a negative value may be assigned to the expected foot wheel location corresponding to the hip joint corresponding to the outer mechanical leg 1203. The inner mechanical leg 1204 is located on the right side of the vertical plane, and a positive value may be assigned to an expected foot wheel location corresponding to a hip joint corresponding to the inner mechanical leg 1204. The positive/negative value is configured for representing that the first direction is opposite to the second direction.

In some embodiments, a hip joint coordinate system is constructed with a geometric center of a rotation center of each hip joint as an origin. A direction of a coordinate axis of the hip joint coordinate system may be consistent with a direction of a world coordinate system, or may be rotated relative to the world coordinate system. This is not limited in the embodiments of this application. An x-axis of the world coordinate system is parallel to the support surface, and a z-axis of the world coordinate system is perpendicular to the support surface.

The expected foot wheel location is configured for representing a relative location between the foot wheel and the hip joint. In this way, coordinates of the foot wheel in the hip joint coordinate system may be determined based on the expected foot wheel location, to represent the expected foot wheel location. After coordinates of each foot wheel in the hip joint coordinate system and coordinates of each hip joint in the hip joint coordinate system are obtained, the coordinates may be converted to the world coordinate system, to perform control planning based on a whole-body dynamic equation of the wheel-legged robot. A specific planning method is described in detail below. Details are not described herein again.

Operation 1002c: Based on expected foot wheel locations respectively corresponding to the hip joints, control the at least one foot wheel, which contacts the support surface, on the two outer mechanical legs to move in a first direction, and controlling at least one foot wheel, which contacts the support surface, on the at least one inner mechanical leg to move in a second direction different from the first direction, to cause the wheel-legged robot to be switched from the initial posture to an adjusted posture.

In some embodiments, the contact point between the foot wheel on the outer mechanical leg and the support surface is controlled to move in the first direction, so that the foot wheel on the outer mechanical leg reaches a corresponding expected foot wheel location. In addition, the contact point between the foot wheel on the inner mechanical leg and the support surface is controlled to move in the second direction, so that the foot wheel on the inner mechanical leg reaches a corresponding expected foot wheel location. In this case, the wheel-legged robot can be controlled to be switched from the initial posture to the expected posture.

In an example, operation 1002c may include the following content.

1. For each hip joint, based on the expected foot wheel location corresponding to the hip joint and a current foot wheel location, a foot wheel reference track corresponding to the hip joint is obtained. The foot wheel reference track is configured for guiding the foot wheel corresponding to the hip joint to move from the current foot wheel location to the expected foot wheel location.

To enable each foot wheel to smoothly move to an expected location from a current location, reference location interpolation may be performed between the current foot wheel location and the expected foot wheel location. For example, interpolation may be performed on the expected foot wheel location corresponding to the hip joint and the current foot wheel location by using a spline curve interpolation method, to obtain the foot wheel reference track corresponding to the hip joint. The foot wheel reference track includes reference locations of the foot wheel corresponding to the hip joint at a plurality of future moments. A reference location at a future moment is a location that the foot wheel needs to reach at the future moment, and a quantity of reference locations (namely, a quantity of future moments) may be set and adjusted according to an actual use requirement. The current foot wheel location may be a location of the foot wheel in the initial state.

For example, that a cubic spline curve interpolation method is used is used as an example. In this way, the foot wheel reference track may be represented as follows:

$$\mathbf{x}_{c_i}^r(t) = a_{0_i} + a_{1_i}t + a_{2_i}t^2 + a_{3_i}t^3, \ t \in [0, T]$$

,

where if t is greater than 0, t is configured for representing a future moment; if t is equal to 0, t is configured for representing a current moment; T is a total quantity of future moments, to represent continuous duration of whole movement; $\mathbf{x}_{c_i}^r(t)$ represents a reference location of a foot wheel corresponding to an $i^{th}$ hip joint at a future moment t; and $a_{0_i}$, $a_{1_i}$, $a_{2_i}$, and $a_{3_i}$ are coefficients. In some embodiments, the reference location may be represented by using an x-axis coordinate in the word coordinate system.

A constraint condition of the foregoing cubic spline curve interpolation method is as follows:

$$\mathbf{x}_{c_i}^r(0) = a_{0_i} = \mathbf{x}_{c_i}^a$$

;

$$\mathbf{x}_{ci}^{r}(T) = a_{0_i} + a_{1_i}T + a_{2_i}T^2 + a_{3_i}T^3 = \mathbf{x}_{ci}^{d};$$

$$\dot{\mathbf{x}}_{c_i}^{r}(0) = a_{1i} = 0;$$

and

$$\dot{\mathbf{x}}_{ci}^{r}(T) = a_{1i} + 2a_{2_i}T + 3a_{3_i}T^2 = 0.$$

2. Based on foot wheel reference tracks respectively corresponding to the hip joints, an expected acceleration track corresponding to the support region of the wheel-legged robot is determined.

The expected acceleration track may be an expected acceleration track corresponding to a center of the support region, and may include expected acceleration of the center of the support region at a plurality of future moments. In this way, each foot wheel is adjusted with a change of the center of the support region without calculating the reference locations of the foot wheels one by one, thereby facilitating reducing an amount of calculation during the adjustment of the support region and further reducing difficulty in adjusting the support region. The expected acceleration is a velocity expected to be reached.

In an example, a process of obtaining the expected acceleration track may be as follows.

(1) Based on the foot wheel reference tracks respectively corresponding to the hip joints, a central reference track corresponding to the support region of the wheel-legged robot is determined. The central reference track is configured for guiding the center of the support region of the wheel-legged robot to move.

In some embodiments, for each future moment, respective reference locations of the foot wheels corresponding to the hip joints at the future moment are obtained; and the respective reference locations of the foot wheels corresponding to the hip joints at the future moment are averaged, to obtain a reference location of the center of the support region at the future moment.

For example, because mass distribution of the wheel-legged robot is uniform, a reference location of the center of the support region at the future moment t may be represented as follows:

$$\mathbf{x}_{c}^{r}(t) = \frac{\sum_{i=1}^{n} \mathbf{x}_{c_i}^{r}(t)}{n},$$

where $n \geq 3$ is a total quantity of foot wheels of the wheel-legged robot.

(2) The expected acceleration track is determined based on the central reference track.

In some embodiments, the expected acceleration track may be obtained by using a proportion-differentiation (PD) controller, thereby facilitating improving stability of adjusting the support region and increasing a response velocity of adjusting the support region. For example, for each future moment corresponding to the central reference track, a difference between a real location of the center of the support region at the future moment and the reference location of the center of the support region at the future moment is calculated, to obtain a first difference; a difference between a real velocity of the center of the support region at the future moment and a reference velocity of the center of the support region at the future moment is calculated, to obtain a second difference; the first difference and a proportional coefficient corresponding to the PD controller are multiplied, to obtain a first product; the second difference and a differential coefficient corresponding to the PD controller are multiplied, to obtain a second product; and the first product and the second product are added, to obtain expected acceleration of the center of the support region at the future moment.

For example, expected acceleration of the center of the support region at the future moment t may be represented as follows:

$$\ddot{\mathbf{x}}_{c}^{d}(t) = k_{p}(\mathbf{x}_{c}^{r}(t) - \mathbf{x}_{c}^{a}(t)) + k_{d}(\dot{\mathbf{x}}_{c}^{r}(t) - \dot{\mathbf{x}}_{c}^{a}(t)),$$

where $k_{p}$ is a proportional coefficient corresponding to the PD controller, $k_{d}$ is a differential coefficient corresponding to the

PD controller, $\mathbf{x_c^r(t)}$ is a real location of the center of the support region at the future moment, $\mathbf{x_c^a(t)}$ is a reference location of the center of the support region at the future moment, $\mathbf{\dot{x}_c^r(t)}$ is a real velocity of the center of the support region at the future moment, and $\mathbf{\dot{x}_c^a(t)}$ is a reference velocity of the center of the support region at the future moment.

3. Based on the expected acceleration track, the at least one foot wheel, which contacts the support surface, on the two outer mechanical legs is controlled to move in the first direction, and the at least one foot wheel, which contacts the support surface, on the at least one inner mechanical leg is controlled to move in the second direction, to cause the wheel-legged robot to be switched from the initial posture to the expected posture.

In the embodiments of this application, movement of a contact point between a foot wheel and the support surface needs to depend on rotation of a hip joint corresponding to the foot wheel and rotation of the foot wheel. In other words, for a foot wheel, joint torque of a hip joint corresponding to the foot wheel and joint torque of the foot wheel need to be obtained, or joint acceleration of a hip joint corresponding to the foot wheel and joint acceleration of the foot wheel need to be obtained.

In an example, the process may include the following content.

(1) The expected acceleration track is substituted into a whole-body dynamic equation corresponding to the wheel-legged robot, and the equation is solved to obtain a joint torque sequence and a joint acceleration sequence that correspond to the wheel-legged robot. The joint torque sequence includes a joint torque corresponding to each hip joint and a joint torque corresponding to each foot wheel, and the joint acceleration sequence includes joint acceleration corresponding to each hip joint and joint acceleration corresponding to each foot wheel.

The whole-body dynamic equation of the wheel-legged robot may be configured for representing association between joints of the wheel-legged robot. For example, the whole-body dynamic equation of the wheel-legged robot may be represented as follows:

$$
\begin{bmatrix} \mathbf{H} & -\mathbf{S^T} & -\mathbf{J_c^T} \\ \mathbf{J_t} & \mathbf{0_{n_t \times n_j}} & \mathbf{0_{n_t \times n_c}} \end{bmatrix}
\begin{bmatrix} \mathbf{\ddot{q}} \\ \mathbf{\tau} \\ \mathbf{f} \end{bmatrix}
=
\begin{bmatrix} -\mathbf{C} \\ \mathbf{\ddot{x}_t - \dot{J}_t \dot{q}} \end{bmatrix},
$$

where H is an inertia matrix corresponding to the wheel-legged robot, S is a selection matrix of the wheel-legged robot, $J_c$ is a contact Jacobian matrix corresponding to the wheel-legged robot, $J_t$ is a task Jacobian matrix corresponding to the wheel-legged robot, T is a joint torque sequence corresponding to the wheel-legged robot, f is a contact force between the wheel-legged robot and the support surface, C represents Coriolis and Centrifugal forces matrix corresponding to the wheel-legged robot, $\ddot{q}$ is a joint acceleration sequence corresponding to the wheel-legged robot, $\dot{q}$ is a joint velocity sequence corresponding to the wheel-legged robot, and $\ddot{X}_t$ is expected acceleration of operating space of the wheel-legged robot.

In the embodiments of this application, $\ddot{X}_t$ is substituted with $\mathbf{\ddot{x}_c^d(t)}$ into the foregoing whole-body dynamic equation, and the equation can be solved to obtain the joint torque sequence corresponding to the wheel-legged robot and the joint acceleration sequence corresponding to the wheel-legged robot.

$\ddot{q}$, $\tau$, and f are unknown quantities. The rest are known quantities, and may be obtained by calculation by using location data transmitted back by a drive motor encoder and mechanical design data of the wheel-legged robot. If possible, the foregoing whole-body dynamic equation is solved by using a matrix inversion method or a quadratic programming optimization method, to obtain the joint torque sequence corresponding to the wheel-legged robot and the joint acceleration sequence corresponding to the wheel-legged robot.

(2) Based on the joint torque sequence or the joint acceleration sequence, the at least one foot wheel, which contacts the support surface, on the two outer mechanical legs is controlled to move in the first direction, and the at least one foot wheel, which contacts the support surface, on the at least one inner mechanical leg is controlled to move in the second direction, to cause the wheel-legged robot to be switched from the initial posture to the expected posture.

For example, in a case that the wheel-legged robot is controlled by torque, based on the joint torque sequence, the at least one foot wheel, which contacts the support surface, on the two outer mechanical legs is controlled to move in the first direction, and the at least one foot wheel, which contacts the support surface, on the at least one inner mechanical leg is controlled to move in the second direction, to cause the wheel-legged robot to be switched from the initial posture to the expected posture.

For example, for a foot wheel on a specific outer mechanical leg, joint torque of the foot wheel at a specific future moment is transmitted to a drive motor corresponding to the foot wheel, and joint torque of a hip joint corresponding to the foot wheel at the specific future moment is also transmitted to a drive motor of the hip joint corresponding to the foot wheel, to perform driving by using the two drive motors simultaneously, to cause at least one foot wheel, which contacts the support surface, on the two outer mechanical legs to move in the first direction. A movement method of the at least one foot wheel, which contacts the support surface, on the at least one inner mechanical leg is the same as the above. Details are not described herein again. The two outer mechanical legs synchronously move, to cause contact points corresponding to the two outer mechanical legs to synchronously move in the first direction. The inner mechanical legs also synchronously move, to cause contact points corresponding to the inner mechanical legs to synchronously move in the second direction.

In some embodiments, in a case that the wheel-legged robot is controlled by location, integration is performed on the joint acceleration sequence, to obtain a joint location sequence, and based on the joint location sequence, the at least one foot wheel, which contacts the support surface, on the two outer mechanical legs is controlled to move in the first direction, and the at least one foot wheel, which contacts the support surface, on the at least one inner mechanical leg is controlled to move in the second direction, to cause the wheel-legged robot to be switched from the initial posture to the expected posture.

In the embodiments of this application, the support region of the wheel-legged robot is supported to be adjusted by torque-controlling or location-controlling, thereby improving flexibility of adjusting the support region. In addition, the joint torque sequence and the joint acceleration sequence are obtained by using the whole-body dynamic equation corresponding to the wheel-legged robot, facilitating improving rationality of adjusting the support region, thereby improving accuracy of adjusting the support region.

The wheel-legged robot in the embodiments of this application performs, after receiving a control signal, corresponding movement and calculation based on the control signal. For example, all of the foregoing operations, such as moving the inner mechanical leg, moving the outer mechanical leg, calculating the expected foot wheel location, and calculating the foot wheel reference track, are performed by the wheel-legged robot based on the control signal. The foregoing control signal may be set and adjusted according to an actual use requirement. This is not limited in the embodiments of this application.

In conclusion, according to the technical solutions provided in the embodiments of this application, for a wheel-legged robot including an inner mechanical leg and an outer mechanical leg, because rotation centers of hip joints corresponding to the wheel-legged robot are located on a same vertical plane, a support region of the wheel-legged robot can be changed by merely adjusting the outer mechanical leg in a first direction and adjusting the inner mechanical leg in a second direction, thereby reducing difficulty in adjusting the support region and further improving efficiency of adjusting the support region.

In addition, because the wheel-legged robot can be flexibly switched between a large support region and a small support region by merely adjusting the inner mechanical leg and the outer mechanical leg in the two directions, the wheel-legged robot can carry loads in the large support region, and can also pass through narrow space in the small support region. In addition, a height of the wheel-legged robot can also change with the switching of the support region, expanding operating space of a body (such as an upper limb) of the wheel-legged robot, thereby improving a capability of the wheel-legged robot in adapting to an environment and expanding a scope of application of the wheel-legged robot.

In addition, the outer mechanical legs are supported to synchronously move, the inner mechanical legs are supported to synchronously move, and a leg length remains unchanged during the movement. In this way, the support region of the wheel-legged robot and a height of the body of the wheel-legged robot can be flexibly adjusted in a case that the body of the wheel-legged robot remains unchanged. In addition, because there is no need to consider an influence of a change of the leg length of the mechanical leg on the support region, complexity of adjusting the support region is further reduced.

The following is an apparatus embodiment of this application, which can be configured for performing the method embodiments of this application. For details not disclosed in the apparatus embodiment of this application, refer to the method embodiments of this application.

FIG. 14 is a block diagram of an apparatus for controlling a wheel-legged robot according to an embodiment of this application. The apparatus has a function of implementing the foregoing method for controlling a wheel-legged robot, and the function may be implemented by hardware or by hardware executing corresponding software. The apparatus may be the computer device (for example, the wheel-legged robot) described above, or may be disposed in a computer device. As shown in FIG. 14, an apparatus 1400 includes: a mechanical leg control module 1401 and a moving module (e.g., contact point moving module) 1402.

The mechanical leg control module 1401 is configured to control the wheel-legged robot to stand on a support surface such that the two outer mechanical legs and the at least one inner mechanical leg of the wheel-legged robot contact the support surface, wherein a relative position between at least two foot wheels on the two outer mechanical legs and the at least one inner mechanical leg meets a constraint condition of a support region corresponding to an initial posture, and the support region is a region enclosed by contact points, each of the contact points being respectively between the support surface and corresponding one foot wheel on the two outer mechanical legs and at least one inner mechanical leg.

The moving module 1402 is configured to: control at least one foot wheel, which contacts the support surface, on the two outer mechanical legs to move in a first direction, and controlling at least one foot wheel, which contacts the support surface, on the at least one inner mechanical leg to move in a second direction different from the first direction, to cause the wheel-legged robot to be switched from the initial posture to an adjusted posture.

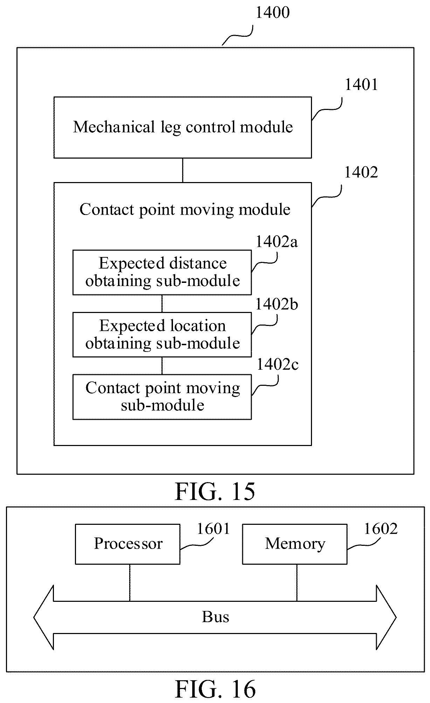

In some embodiments, as shown in FIG. 15, the contact point moving module (namely, moving module) 1402 includes: an expected distance obtaining sub-module 1402a, an expected location obtaining sub-module 1402b, and a contact point moving sub-module 1402c.

The expected distance obtaining sub-module 1402a is configured to obtain, for each hip joint, based on an expected height corresponding to the expected posture, an expected relative distance between the hip joint and an associated support surface corresponding to the hip joint, the associated support surface being a plane that passes a center of a foot wheel on a mechanical leg connected to the hip joint and that is parallel to a support surface on which a foot wheel corresponding to the hip joint is located, and the expected height being a height between a hip joint of the wheel-legged robot in the expected posture and the support surface.

The expected location obtaining sub-module 1402b is configured to obtain, based on the expected relative distance, an expected foot wheel location corresponding to the hip joint, the expected foot wheel location being a location of a center of the foot wheel corresponding to the hip joint under a constraint of the expected relative distance.

The contact point moving sub-module 1402c is configured to: based on expected foot wheel locations respectively corresponding to the hip joints, control the contact point between the foot wheel on the outer mechanical leg and the support surface to move in the first direction, and control the contact point between the foot wheel on the inner mechanical leg and the support surface to move in the second direction, to cause the wheel-legged robot to be switched from the initial posture to the expected posture.

In some embodiments, the contact point moving sub-module 1402c is configured to:

obtain, for each hip joint, based on the expected foot wheel location corresponding to the hip joint and a current foot wheel location, a foot wheel reference track corresponding to the hip joint, the foot wheel reference track being configured for guiding the foot wheel corresponding to the hip joint to move from the current foot wheel location to the expected foot wheel location;

determine, based on foot wheel reference tracks respectively corresponding to the hip joints, an expected acceleration track corresponding to the support region of the wheel-legged robot; and

based on the expected acceleration track, control the contact point between the foot wheel on the outer mechanical leg and the support surface to move in the first direction, and control the contact point between the foot wheel on the inner mechanical leg and the support surface to move in the second direction, to cause the wheel-legged robot to be switched from the initial posture to the expected posture.

In some embodiments, the contact point moving sub-module 1402c is further configured to perform interpolation on the expected foot wheel location corresponding to the hip joint and the current foot wheel location by using a spline curve interpolation method, to obtain the foot wheel reference track corresponding to the hip joint, the foot wheel reference track including reference locations of the foot wheel corresponding to the hip joint at a plurality of future moments.

In some embodiments, the contact point moving sub-module 1402c is further configured to:

determine, based on the foot wheel reference tracks respectively corresponding to the hip joints, a central reference track corresponding to the support region of the wheel-legged robot, the central reference track being configured for guiding a center of the support region of the wheel-legged robot to move; and

determine the expected acceleration track based on the central reference track.

In some embodiments, the foot wheel reference track includes the reference locations of the foot wheel corresponding to the hip joint at the plurality of future moments; and the contact point moving sub-module 1402c is further configured to:

obtain, for each future moment, respective reference locations of the foot wheels corresponding to the hip joints at the future moment; and

average the respective reference locations of the foot wheels corresponding to the hip joints at the future moment, to obtain a reference location of the center of the support region at the future moment.

In some embodiments, the expected acceleration track is obtained through a proportion-differentiation PD controller; and the contact point moving sub-module 1402c is further configured to:

calculate, for each future moment corresponding to the central reference track, a difference between a real location of the center of the support region at the future moment and the reference location of the center of the support region at the future moment, to obtain a first difference;

calculate a difference between a real velocity of the center of the support region at the future moment and a reference velocity of the center of the support region at the future moment, to obtain a second difference;

multiply the first difference and a proportional coefficient corresponding to the PD controller, to obtain a first product;

multiply the second difference and a differential coefficient corresponding to the PD controller, to obtain a second product; and

add the first product and the second product, to obtain expected acceleration of the center of the support region at the future moment.

In some embodiments, the contact point moving sub-module 1402c is further configured to:

substitute the expected acceleration track into a whole-body dynamic equation corresponding to the wheel-legged robot, and solve the equation to obtain a joint torque sequence and a joint acceleration sequence that correspond to the wheel-legged robot, the joint torque sequence including a joint torque corresponding to each hip joint and a joint torque corresponding to each foot wheel, and the joint acceleration sequence including joint acceleration corresponding to each hip joint and joint acceleration corresponding to each foot wheel; and

based on the joint torque sequence or the joint acceleration sequence, control the contact point between the foot wheel on the outer mechanical leg and the support surface to move in the first direction, and control the contact point between the foot wheel on the inner mechanical leg and the support surface to move in the second direction, to cause the wheel-legged robot to be switched from the initial posture to the expected posture.

In some embodiments, the contact point moving sub-module 1402c is further configured to:

in a case that the wheel-legged robot is controlled by torque, based on the joint torque sequence, control the contact point between the foot wheel on the outer mechanical leg and the support surface to move in the first direction, and control the contact point between the foot wheel on the inner mechanical leg and the support surface to move in the second direction, to cause the wheel-legged robot to be switched from the initial posture to the expected posture;

or in a case that the wheel-legged robot is controlled by location, perform integration on the joint acceleration sequence, to obtain a joint location sequence, and based on the joint location sequence, control the contact point between the foot wheel on the outer mechanical leg and the support surface to move in the first direction, and control the contact point between the foot wheel on the inner mechanical leg and the support surface to move in the second direction, to cause the wheel-legged robot to be switched from the initial posture to the expected posture.

In some embodiments, the expected location obtaining sub-module 1402b is configured to:

obtain a leg length of a mechanical leg connected to the hip joint; and

obtain, based on the leg length and the expected relative distance, the expected foot wheel location corresponding to the hip joint.

In some embodiments, in a case that the foot wheel corresponding to the hip joint is located on a right side of a vertical plane, the expected foot wheel location corresponding to the hip joint is a positive value;
or in a case that the foot wheel corresponding to the hip joint is located on a left side of a vertical plane, the expected foot wheel location corresponding to the hip joint is a negative value.

In some embodiments, the hip joints of the wheel-legged robot are coaxial.

In some embodiments, the wheel-legged robot includes at least two inner mechanical legs, the two outer mechanical legs synchronously move, the inner mechanical legs synchronously move, and a length of the mechanical leg of the wheel-legged robot remains unchanged during a change of the support region.

In conclusion, according to the technical solutions provided in the embodiments of this application, for a wheel-legged robot including an inner mechanical leg and an outer mechanical leg, because rotation centers of hip joints corresponding to the wheel-legged robot are located on a same vertical plane, a support region of the wheel-legged robot can be changed by merely adjusting the outer mechanical leg in a first direction and adjusting the inner mechanical leg in a second direction, thereby reducing difficulty in adjusting the support region and further improving efficiency of adjusting the support region.

In addition, because the wheel-legged robot can be flexibly switched between a large support region and a small support region by merely adjusting the inner mechanical leg and the outer mechanical leg in the two directions, the wheel-legged robot can carry loads in the large support region, and can also pass through narrow space in the small support region. In addition, a height of the wheel-legged robot can also change with the switching of the support region, expanding operating space of a body (such as an upper limb) of the wheel-legged robot, thereby improving a capability of the wheel-legged robot in adapting to an environment and expanding a scope of application of the wheel-legged robot.

When the apparatus provided in the foregoing embodiments implements functions of the apparatus, the division of the foregoing functional modules is merely an example for description. In the practical application, the functions may be assigned to and completed by different functional modules according to the requirements, that is, the internal structure of the device is divided into different functional modules, to implement all or some of the functions described above. In addition, the apparatus and method embodiments provided in the foregoing embodiments belong to the same conception. For the specific implementation process, refer to the method embodiments. Details are not described herein again.

FIG. 16 is a simplified structural block diagram of a computer device according to an embodiment of this application. The terminal device may be any electronic device having data calculation, processing, and storage capabilities.

In some embodiments, as shown in FIG. 16, the computer device includes a processor 1601 and a memory 1602. The processor 1601 includes, but is not limited to any one of the following: a central processing unit (CPU), a graphics processing unit (GPU), a field programmable gate array (FPGA), or the like. The memory 1602 may include a storage device such as a random-access memory (RAM) or a read-only memory (ROM). The processor 1601 and the memory 1602 may be connected through a system bus.

In some embodiments, the memory 1602 has a computer program stored therein, and the computer program is loaded and executed by the processor 1601 to implement the foregoing method for controlling a wheel-legged robot.

In some embodiments, a computer-readable storage medium is further provided. The storage medium has a computer program stored therein. The computer program, when executed by a processor, implements the foregoing method for controlling a wheel-legged robot.

In some embodiments, the computer-readable storage medium may include: a read-only memory (ROM), a random-access memory (RAM), a solid state drive (SSD), an optical disc, or the like. The random-access memory may include a resistance random access memory (ReRAM) and a dynamic random access memory (DRAM).

In some embodiments, a computer program product is further provided. The computer program product includes a computer program, and the computer program is stored in a computer-readable storage medium. A processor of a computer device reads the computer program from the computer-readable storage medium, and the processor executes the computer program to cause the computer device to perform the foregoing method for controlling a wheel-legged robot.

In the embodiments of this application, before collection of relevant data of the user and during the collection of the relevant data of the user, a prompt interface or a pop-up window may be displayed, or audio prompt information may be outputted. The prompt interface, the pop-up window, or the audio prompt information is configured for prompting the user that the relevant data of the user is currently collected. In this way, in this application, only after a confirmation operation transmitted by the user for the prompt interface or the pop-up window is obtained, a relevant operation of obtaining the relevant data of the user is started to be performed. Otherwise (in other words, the confirmation operation transmitted by the user for the prompt interface or the pop-up window is not obtained), the relevant operation of obtaining the relevant data of the user is ended, in other words, the relevant data of the user is not obtained. In other words, all user data collected in this application is strictly processed according to requirements of relevant national laws and regulations. The obtained personal information is collected with consent and authorization of the user within the scope of authorization of the laws and regulations and a subject of the personal information. Performing of subsequent data use and processing, and collection, use, and processing of the relevant user data are required to comply with relevant laws, regulations, and standards of relevant countries and regions. For example, a real environment and the like involved in this application are all obtained under full authorization.

It is to be understood that "plurality of" mentioned in this specification means two or more. "And/or" describes an association relationship for describing associated objects and represents that three relationships may exist. For example, A and/or B may represent the following three cases: Only A exists, both A and B exist, and only B exists. The character "/" generally indicates an "or" relationship between the associated objects. In addition, the step numbers described in this specification merely schematically show a possible execution sequence of the steps. In some other embodiments, the steps may not be performed according to the number sequence. For example, two steps with different numbers may be performed simultaneously, or two steps with different numbers may be performed according to a sequence contrary to the sequence shown in the figure. This is not limited in the embodiments of this application.

The foregoing descriptions are merely exemplary embodiments of this application, but are not intended to limit this application. Any modification, equivalent replacement, or improvement made within the spirit and principle of this application shall fall within the protection scope of this application.

**Claims**

1. A method for controlling a wheel-legged robot, performed by a computer device, the wheel-legged robot comprising a body, and two outer mechanical legs and at least one inner mechanical leg that are connected to the body through hip joints, a hip joint corresponding to the at least one inner mechanical leg being located between hip joints corresponding to the two outer mechanical legs, and a rotation center of the hip joint corresponding to the outer mechanical leg and a rotation center of the hip joint corresponding to the inner mechanical leg being located on a same vertical plane; and the method comprising:

   controlling the wheel-legged robot to stand on a support surface such that the two outer mechanical legs and the at least one inner mechanical leg of the wheel-legged robot contact the support surface, wherein a relative position between at least two foot wheels on the two outer mechanical legs and the at least one inner mechanical leg meets a constraint condition of a support region corresponding to an initial posture, and the support region is a region enclosed by contact points, each of the contact points being respectively between the support surface and corresponding one foot wheel on the two outer mechanical legs and at least one inner mechanical leg; and controlling at least one foot wheel, which contacts the support surface, on the two outer mechanical legs to move in a first direction, and controlling at least one foot wheel, which contacts the support surface, on the at least one inner mechanical leg to move in a second direction different from the first direction, to cause the wheel-legged robot to be switched from the initial posture to an adjusted posture.

2. The method according to claim 1, wherein the controlling at least one foot wheel, which contacts the support surface, on the two outer mechanical legs to move in a first direction, and controlling at least one foot wheel, which contacts the support surface, on the at least one inner mechanical leg to move in a second direction different from the first direction, to cause the wheel-legged robot to be switched from the initial posture to an adjusted posture comprises:

   obtaining, for each hip joint, based on an expected height corresponding to the adjusted posture, an expected relative distance between the hip joint and an associated support surface corresponding to the hip joint, the associated support surface being a plane that passes a center of a foot wheel on a mechanical leg connected to the hip joint and that is parallel to a support surface on which a foot wheel corresponding to the hip joint is located, and the expected height being a height between a hip joint of the wheel-legged robot in the expected posture and the support surface;
   obtaining, based on the expected relative distance, an expected foot wheel location corresponding to the hip joint, the expected foot wheel location being a location of a center of the foot wheel corresponding to the hip joint under a constraint of the expected relative distance; and
   based on expected foot wheel locations respectively corresponding to the hip joints, controlling the at least one foot wheel, which contacts the support surface, on the two outer mechanical legs to move in the first direction, and controlling at least one foot wheel, which contacts the support surface, on the at least one inner mechanical leg to move in the second direction, to cause the wheel-legged robot to be switched from the initial posture to the adjusted posture.

3. The method according to claim 2, wherein the based on expected foot wheel locations respectively corresponding to the hip joints, controlling the at least one foot wheel, which contacts the support surface, on the two outer mechanical legs to move in the first direction, and controlling at least one foot wheel, which contacts the support surface, on the at least one inner mechanical leg to move in the second direction, to cause the wheel-legged robot to be switched from the initial posture to the adjusted posture comprises:

   obtaining, for each hip joint, based on the expected foot wheel location corresponding to the hip joint and a current foot wheel location, a foot wheel reference track corresponding to the hip joint, the foot wheel reference track being configured for guiding the foot wheel corresponding to the hip joint to move from the current foot wheel location to the expected foot wheel location;

determining, based on foot wheel reference tracks respectively corresponding to the hip joints, an expected acceleration track corresponding to the support region of the wheel-legged robot; and

based on the expected acceleration track, controlling the at least one foot wheel, which contacts the support surface, on the two outer mechanical legs to move in the first direction, and controlling at least one foot wheel, which contacts the support surface, on the at least one inner mechanical leg to move in the second direction, to cause the wheel-legged robot to be switched from the initial posture to the adjusted posture.

4. The method according to claim 3, wherein the obtaining, for each hip joint, based on the expected foot wheel location corresponding to the hip joint and a current foot wheel location, a foot wheel reference track corresponding to the hip joint comprises:

performing interpolation on the expected foot wheel location corresponding to the hip joint and the current foot wheel location by using a spline curve interpolation method, to obtain the foot wheel reference track corresponding to the hip joint,

the foot wheel reference track comprising reference locations of the foot wheel corresponding to the hip joint at a plurality of future moments.

5. The method according to any one of claims 3 to 4, wherein the determining, based on foot wheel reference tracks respectively corresponding to the hip joints, an expected acceleration track corresponding to the support region of the wheel-legged robot comprises:

determining, based on the foot wheel reference tracks respectively corresponding to the hip joints, a central reference track corresponding to the support region of the wheel-legged robot, the central reference track being configured for guiding a center of the support region of the wheel-legged robot to move; and

determining the expected acceleration track based on the central reference track.

6. The method according to claim 5, wherein the foot wheel reference track comprises the reference locations of the foot wheel corresponding to the hip joint at the plurality of future moments; and

the determining, based on the foot wheel reference tracks respectively corresponding to the hip joints, a central reference track of the support region comprises:

obtaining, for each future moment, respective reference locations of the foot wheels corresponding to the hip joints at the future moment; and

averaging the respective reference locations of the foot wheels corresponding to the hip joints at the future moment, to obtain a reference location of the center of the support region at the future moment.

7. The method according to any one of claims 5 to 6, wherein the expected acceleration track is obtained through a proportion-differentiation PD controller; and

the determining the expected acceleration track based on the central reference track comprises:

calculating, for each future moment corresponding to the central reference track, a difference between a real location of the center of the support region at the future moment and the reference location of the center of the support region at the future moment, to obtain a first difference;

calculating a difference between a real velocity of the center of the support region at the future moment and a reference velocity of the center of the support region at the future moment, to obtain a second difference;

multiplying the first difference and a proportional coefficient corresponding to the PD controller, to obtain a first product;

multiplying the second difference and a differential coefficient corresponding to the PD controller, to obtain a second product; and

adding the first product and the second product, to obtain expected acceleration of the center of the support region at the future moment.

8. The method according to any one of claims 3 to 7, wherein the based on the expected acceleration track, controlling the at least one foot wheel, which contacts the support surface, on the two outer mechanical legs to move in the first direction, and controlling at least one foot wheel, which contacts the support surface, on the at least one inner mechanical leg to move in the second direction, to cause the wheel-legged robot to be switched from the initial posture to the adjusted posture comprises:

substituting the expected acceleration track into a whole-body dynamic equation corresponding to the wheel-legged robot, and solving the equation to obtain a joint torque sequence and a joint acceleration sequence that correspond to the wheel-legged robot, the joint torque sequence comprising a joint torque corresponding to each hip joint and a joint torque corresponding to each foot wheel, and the joint acceleration sequence comprising joint acceleration corresponding to each hip joint and joint acceleration corresponding to each foot wheel; and based on the joint torque sequence or the joint acceleration sequence, controlling the at least one foot wheel, which contacts the support surface, on the two outer mechanical legs to move in the first direction, and controlling at least one foot wheel, which contacts the support surface, on the at least one inner mechanical leg to move in the second direction, to cause the wheel-legged robot to be switched from the initial posture to the adjusted posture.

9. The method according to claim 8, wherein the based on the joint torque sequence or the joint acceleration sequence, controlling the at least one foot wheel, which contacts the support surface, on the two outer mechanical legs to move in the first direction, and controlling at least one foot wheel, which contacts the support surface, on the at least one inner mechanical leg to move in the second direction, to cause the wheel-legged robot to be switched from the initial posture to the adjusted posture comprises:

in a case that the wheel-legged robot is controlled by torque, based on the joint torque sequence, controlling the at least one foot wheel, which contacts the support surface, on the two outer mechanical legs to move in the first direction, and controlling at least one foot wheel, which contacts the support surface, on the at least one inner mechanical leg to move in the second direction, to cause the wheel-legged robot to be switched from the initial posture to the adjusted posture;
or
in a case that the wheel-legged robot is controlled by location, performing integration on the joint acceleration sequence, to obtain a joint location sequence, and based on the joint location sequence, controlling the at least one foot wheel, which contacts the support surface, on the two outer mechanical legs to move in the first direction, and controlling at least one foot wheel, which contacts the support surface, on the at least one inner mechanical leg to move in the second direction, to cause the wheel-legged robot to be switched from the initial posture to the adjusted posture.

10. The method according to claim 2, wherein the obtaining, based on the expected relative distance, an expected foot wheel location corresponding to the hip joint comprises:

obtaining a leg length of a mechanical leg connected to the hip joint; and
obtaining, based on the leg length and the expected relative distance, the expected foot wheel location corresponding to the hip joint.

11. The method according to claim 10, wherein

in a case that the foot wheel corresponding to the hip joint is located on a right side of the vertical plane, the expected foot wheel location corresponding to the hip joint is a positive value;
or
in a case that the foot wheel corresponding to the hip joint is located on a left side of the vertical plane, the expected foot wheel location corresponding to the hip joint is a negative value.

12. The method according to any one of claims 1 to 11, wherein the hip joints of the wheel-legged robot are coaxial.

13. The method according to any one of claims 1 to 12, wherein the wheel-legged robot comprises at least two inner mechanical legs, the two outer mechanical legs synchronously move, the inner mechanical legs synchronously move, and a length of the mechanical leg of the wheel-legged robot remains unchanged during a change of the support region.

14. An apparatus for controlling a wheel-legged robot, the wheel-legged robot comprising a body, and two outer mechanical legs and at least one inner mechanical leg that are connected to the body through hip joints, a hip joint corresponding to the at least one inner mechanical leg being located between hip joints corresponding to the two outer mechanical legs, and a rotation center of the hip joint corresponding to the outer mechanical leg and a rotation center of the hip joint corresponding to the inner mechanical leg being located on a same vertical plane; and the apparatus comprising:

a mechanical leg control module, configured to: control the wheel-legged robot to stand on a support surface such that the two outer mechanical legs and the at least one inner mechanical leg of the wheel-legged robot contact the support surface, wherein a relative position between at least two foot wheels on the two outer mechanical legs and the at least one inner mechanical leg meets a constraint condition of a support region corresponding to an initial posture, and the support region is a region enclosed by contact points, each of the contact points being respectively between the support surface and corresponding one foot wheel on the two outer mechanical legs and at least one inner mechanical leg; and

a moving module, configured to: control at least one foot wheel, which contacts the support surface, on the two outer mechanical legs to move in a first direction, and controlling at least one foot wheel, which contacts the support surface, on the at least one inner mechanical leg to move in a second direction different from the first direction, to cause the wheel-legged robot to be switched from the initial posture to an adjusted posture.

15. A computer device, comprising a processor and a memory, the memory having a computer program stored therein, the computer program being loaded and executed by the processor to implement the method for controlling a wheel-legged robot according to any one of claims 1 to 13.

16. A computer-readable storage medium, having a computer program stored therein, the computer program being loaded and executed by a processor to implement the method for controlling a wheel-legged robot according to any one of claims 1 to 13.

17. A computer program product, comprising a computer program, the computer program being stored in a computer-readable storage medium, and a processor reading the computer program from the computer-readable storage medium and executing the computer program, to implement the method for controlling a wheel-legged robot according to any one of claims 1 to 13.

FIG. 1

Sagittal plane

**200**

208

209

205

207

206

Rotation center of a hip joint

204

201

202

203

FIG. 2

303

301

302

FIG. 3

401

403

402

FIG. 4

501

503

502

FIG. 5

FIG. 6

FIG. 7

FIG. 8

FIG. 9

| |
|---|
| Control, under a constraint of a support region corresponding to an initial posture, through an outer mechanical leg and an inner mechanical leg, a wheel-legged robot to stand on a support surface, the support region being a region enclosed by contact points respectively between foot wheels on the mechanical legs of the wheel-legged robot and the support surface |

1001

↓

| |
|---|
| Control a contact point between a foot wheel on the outer mechanical leg and the support surface to move in a first direction, and control a contact point between a foot wheel on the inner mechanical leg and the support surface to move in a second direction, to cause the wheel-legged robot to be switched from the initial posture to an expected posture |

1002

FIG. 10

FIG. 11

FIG. 12

| | |
|---|---|
| Obtain, for each hip joint, based on an expected height corresponding to the expected posture, an expected relative distance between the hip joint and an associated support surface corresponding to the hip joint, the associated support surface being a plane that passes a center of a foot wheel on a mechanical leg connected to the hip joint and that is parallel to a support surface on which a foot wheel corresponding to the hip joint is located, and the expected height being a height between a hip joint of the wheel-legged robot in the expected posture and the support surface | 1002a |
| Obtain, based on the expected relative distance, an expected foot wheel location corresponding to the hip joint, the expected foot wheel location being a location of a center of the foot wheel corresponding to the hip joint under a constraint of the expected relative distance | 1002b |
| Based on expected foot wheel locations respectively corresponding to the hip joints, control the contact point between the foot wheel on the outer mechanical leg and the support surface to move in the first direction, and control the contact point between the foot wheel on the inner mechanical leg and the support surface to move in the second direction, to cause the wheel-legged robot to be switched from the initial posture to the expected posture | 1002c |

FIG. 13

1400

FIG. 14

1400

Mechanical leg control module — 1401

Contact point moving module — 1402

Expected distance obtaining sub-module — 1402a

Expected location obtaining sub-module — 1402b

Contact point moving sub-module — 1402c

FIG. 15

Processor — 1601

Memory — 1602

Bus

FIG. 16

## INTERNATIONAL SEARCH REPORT

| International application No. |
|---|
| **PCT/CN2023/131735** |

**A. CLASSIFICATION OF SUBJECT MATTER**

G05B19/042(2006.01)i

According to International Patent Classification (IPC) or to both national classification and IPC

**B. FIELDS SEARCHED**

Minimum documentation searched (classification system followed by classification symbols)

IPC: G05B

Documentation searched other than minimum documentation to the extent that such documents are included in the fields searched

Electronic data base consulted during the international search (name of data base and, where practicable, search terms used)

CNTXT: ENTXTC; ENTXT; 百度; BAIDU; CNKI; 万方; WANFANG: 腾讯科技, 周钦钦, 李景辰, 王海涛, 王帅, 郑宇, 黎雄, 机器人, 轮, 三足, 四足, 腿, 中间, 之间, 髋, 同轴, 负载, 负荷, 调节, 调整, 增加, 减小, 角度, 夹角, 距离, 支撑, 稳定, robot, wheel, third, four, leg, foot, hip, support, angle, distance, stability

**C. DOCUMENTS CONSIDERED TO BE RELEVANT**

| Category* | Citation of document, with indication, where appropriate, of the relevant passages | Relevant to claim No. |
|---|---|---|
| Y | US 2019031259 A1 (SPHERO, INC.) 31 January 2019 (2019-01-31)<br>description, paragraphs [0027]-[0064], and figures 1-9B | 1, 12-17 |
| Y | CN 115583298 A (HARBIN INSTITUTE OF TECHNOLOGY) 10 January 2023 (2023-01-10)<br>description, paragraph [0035], and figure 8 | 1, 12-17 |
| A | CN 111290272 A (OCEAN UNIVERSITY OF CHINA et al.) 16 June 2020 (2020-06-16)<br>entire document | 1-17 |
| A | WO 2021047680 A1 (ZHEJIANG LAB) 18 March 2021 (2021-03-18)<br>entire document | 1-17 |
| A | US 2022395974 A1 (BALASUBRAMANIAN SWAMINATHAN) 15 December 2022 (2022-12-15)<br>entire document | 1-17 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **07 December 2023** | **13 January 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**EP 4 645 007 A1**

| INTERNATIONAL SEARCH REPORT<br>Information on patent family members | | International application No.<br><br>**PCT/CN2023/131735** |
|---|---|---|

| Patent document<br>cited in search report | | | Publication date<br>(day/month/year) | Patent family member(s) | | | Publication date<br>(day/month/year) |
|---|---|---|---|---|---|---|---|
| US | 2019031259 | A1 | 31 January 2019 | US | 10421510 | B2 | 24 September 2019 |
| CN | 115583298 | A | 10 January 2023 | None | | | |
| CN | 111290272 | A | 16 June 2020 | None | | | |
| WO | 2021047680 | A1 | 18 March 2021 | None | | | |
| US | 2022395974 | A1 | 15 December 2022 | US | 2023241768 | A2 | 03 August 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 2023104688382